# EUROPÄISCHE PATENTANMELDUNG

(11) **EP 1 479 558 A1**
(43) Veröffentlichungstag der Anmeldung: **24.11.2004**
(21) Anmeldenummer: 03405366.0
(22) Anmeldetag: 23.05.2003
(51) Int. Cl.: B60L 9/30, H02M 5/458

(54) **Traktionsumrichterschaltung zur Ankopplung an ein elektrisches Versorgungsnetz**

(71) Anmelder: ABB Schweiz AG, 5400 Baden (CH)
(72) Erfinder: Guggisberg, Beat, 5417 Untersiggenthal (CH); Steimer, Peter, 5424 Unterehrendingen (CH); Celanovic, Nikola, 5405 Baden-Dättwil (CH); Züger, Harry, 1219 Chatelaine/Genève (CH)
(74) Vertreter: ABB Patent Attorneys

(57) **Zusammenfassung**

Es wird eine Traktionsumrichterschaltung zur Ankopplung an ein elektrisches Versorgungsnetz (1) mit mindestens einem aus einem ersten Teilumrichter (2) und einem zweiten Teilumrichter (3) gebildeten Antriebsumrichtersystem (4) angegeben, wobei bei jedem Antriebsumrichtersystem (4) der erste Teilumrichter (2) gleichspannungsseitig mit dem zweiten Teilumrichter (3) über einen Gleichspannungskreis (5) verbunden ist. Weiterhin ist ein Transformator (8) mit einer ersten Transformatorwicklung (6) und einer zweiten Transformatorwicklung (7) vorgesehen, wobei der erste Teilumrichter (2) wechselspannungsseitig mit der zweiten Transformatorwicklung (7) verbunden ist und die erste Transformatorwicklung (6) über einen Versorgungsnetzkonfigurationsschalter (9) beim Wechselspannungsbetrieb der Traktionsumrichterschaltung an eine Wechselspannungsquelle (10) des elektrischen Versorgungsnetzes (1) schaltbar ist. Darüber hinaus ist ein wechselspannungsseitig mit einer dritten Transformatorwicklung (12) des Transformators (8) verbundener Netzumrichter (11) vorgesehen, der gleichspannungsseitig über den Versorgungsnetzkonfigurationsschalter (9) beim Gleichspannungsbetrieb der Traktionsumrichterschaltung an eine Gleichspannungsquelle (13) des elektrischen Versorgungsnetzes (1) schaltbar ist.

## Beschreibung

### Technisches Gebiet

Die Erfindung bezieht sich auf das Gebiet der Leistungselektronik. Sie geht aus von einer Traktionsumrichterschaltung zur Ankopplung an ein elektrisches Versorgungsnetz gemäss dem Oberbegriff des unabhängigen Anspruchs.

### Stand der Technik

Traktionsumrichterschaltungen werden heute in einer Fülle von leistungselektronischen Anwendungen für schienengebundene Fahrzeuge, wie elektrische Bahnen eingesetzt. Besonders bei länderübergreifendem Einsatz schienengebundener Fahrzeuge muss die Antriebsenergie aus verschiedenen elektrischen Versorgungsnetzen, d.h. aus verschiedenen Gleichspannungsnetzen und Wechselspannungsnetzen unterschiedlicher Netzspannung entnommen oder eingespeist werden können. Dazu sind Traktionsumrichterschaltungen nötig, die sowohl an ein elektrisches Versorgungsnetz basierend auf einer Gleichspannung als auch an ein elektrisches Versorgungsnetz basierend auf einer Wechselspannung ankoppelbar sind. Gängige elektrische Versorgungsnetze, insbesondere für Bahnnetze, mit einer Wechselspannungsquelle basieren auf einer Wechselspannung von 15kV mit einer Frequenz von 16 2/3Hz oder von 25kV und 50Hz. Gängige elektrische Versorgungsnetze, insbesondere für Bahnnetze, mit einer Gleichspannungsquelle basieren auf einer Gleichspannung von 1,5kV oder 3kV. Eine solche Traktionsumrichterschaltung ist beispielsweise in der DE 197 42 623 A1 angegeben. Darin weist die Traktionsumrichterschaltung mindestens ein aus einem ersten Teilumrichter und einem zweiten Teilumrichter gebildetes Antriebsumrichtersystem auf, wobei bei jedem Antriebsumrichtersystem der erste Teilumrichter gleichspannungsseitig mit dem zweiten Teilumrichter über einen durch einen Kondensator gebildeten Gleichspannungskreis verbunden ist. Üblicherweise umfasst jeder Teilumrichter eine Vielzahl von ansteuerbaren Leistungshalbleiterschaltern. Weiterhin ist ein Transformator vorgesehen, welcher eine erste Transformatorwicklung und eine zweite Transformatorwicklung aufweist, wobei der erste Teilumrichter wechselspannungsseitig mit der zweiten Transformatorwicklung verbunden ist und die erste Transformatorwicklung über einen Versorgungsnetzkonfigurationsschalter beim Wechselspannungsbetrieb der Traktionsumrichterschaltung an eine Wechselspannungsquelle des elektrischen Versorgungsnetzes schaltbar ist. Beim Gleichspannungsbetrieb der Traktionsumrichterschaltung nach der DE 197 42 623 A1 verbindet der Versorgungsnetzkonfigurationsschalter eine Gleichspannungsquelle des elektrischen Versorgungsnetzes direkt mit dem Kondensator des Gleichspannungskreises.

Problematisch bei einer solchen Traktionsumrichterschaltung gemäss der DE 197 42 623 A1 ist, dass im Gleichspannungsbetrieb der Traktionsumrichterschaltung die Gleichspannungsquelle des elektrischen Versorgungsnetzes mittels des Versorgungsnetzkonfigurationsschalters direkt mit Kondensator des Gleichspannungskreises des jeweiligen Antriebsumrichtersystems verbunden ist, d.h. dass am Kondensator des Gleichspannungskreises eine hohe Gleichspannung von 1,5kV beziehungsweise 3kV anliegt. Der Kondensator des Gleichspannungskreises muss somit für diese hohe Gleichspannung bezüglich seine Spannungsfestigkeit ausgelegt sein, so dass ein entsprechend teurer Kondensator eingesetzt werden muss, der zudem bezüglich seiner Baugrösse viel Platz benötigt. Desweiteren müssen die ansteuerbaren Leistungshalbleiterschalter des zweiten Teilumrichters des jeweiligen Antriebsumrichtersystems ebenfalls auf die vorstehend genannte hohe am Gleichspannungskreis beim Gleichspannungsbetrieb der Traktionsumrichterschaltung anliegende Gleichspannung ausgelegt sein, d.h. sie müssen jeweils eine Sperrspannung grösser 1.5kV beziehungsweise grösser 3kV aufweisen. Solche Leistungshalbleiterschalter sind aber teuer, benötigen ein aufwendiges Schutzkonzept, beispielsweise in Form einer Schutzbeschaltung, sind wartungsintensiv und störungsanfällig und benötigen ebenfalls viel Platz. Da gängigerweise eine Traktionsumrichterschaltung mehrere der vorstehend genannten Antriebsumrichtersysteme aufweist, weist eine Traktionsumrichterschaltung gemäss der DE 197 42 623 A1 somit einen enormen Platzbedarf auf. In einem schienengebundenen Fahrzeug ist aber gerade das Platzangebot für Traktionsumrichterschaltungen äusserst beschränkt. Darüber hinaus stellt der erste Teilumrichter für den Wechselspannungsbetrieb der Traktionsumrichterschaltung an der Wechselspannungsquelle des elektrischen Versorgungsnetzes an seiner Gleichspannungsseite ebenfalls eine hohe Gleichspannung für den Gleichspannungskreis bereit, d.h. im wesentlichen 1,5kV beziehungsweise 3kV, so dass auch die ansteuerbaren Leistungshalbleiterschalter des ersten Teilumrichters auf diese hohe Gleichspannung ausgelegt sein müssen, d.h. sie müssen jeweils eine Sperrspannung grösser 1.5kV beziehungsweise grösser 3kV aufweisen. Dadurch steigen aber die Kosten weiter an und der Wartungsaufwand, der Aufwand für das Schutzkonzept sowie die Störanfälligkeit und der Platzbedarf vergrössern sich ebenfalls.

### Darstellung der Erfindung

Aufgabe der Erfindung ist es deshalb, eine Traktionsumrichterschaltung zur Ankopplung an ein elektrisches Versorgungsnetz anzugeben, welche mit einem geringen Platzbedarf aus kommt und zusätzlich unkompliziert und wenig störungsanfällig ist. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Traktionsumrichterschaltung zur Ankopplung an ein elektrisches Versorgungsnetz weist mindestens ein aus einem ersten Teilumrichter und einem zweiten Teilumrichter gebildetes Antriebsumrichtersystem auf, wobei bei jedem Antriebsumrichtersystem der erste Teilumrichter gleichspannungsseitig mit dem zweiten Teilumrichter über einen Gleichspannungskreis verbunden ist. Weiterhin ist ein Transformator vorgesehen, der eine erste Transformatorwicklung und eine zweite Transformatorwicklung aufweist, wobei der erste Teilumrichter wechselspannungsseitig mit der zweiten Transformatorwicklung verbunden ist und die erste Transformatorwicklung über einen Versorgungsnetzkonfigurationsschalter beim Wechselspannungsbetrieb der Traktionsumrichterschaltung an eine Wechselspannungsquelle des elektrischen Versorgungsnetzes schaltbar ist. Erfindungsgemäss ist ein Netzumrichter vorgesehen, welcher wechselspannungsseitig mit einer dritten Transformatorwicklung des Transformators verbunden ist, wobei der Netzumrichter gleichspannungsseitig über den Versorgungsnetzkonfigurationsschalter beim Gleichspannungsbetrieb der Traktionsumrichterschaltung an eine Gleichspannungsquelle des elektrischen Versorgungsnetzes schaltbar ist. Somit muss lediglich der Netzumrichter auf die beim Gleichspannungsbetrieb der Traktionsumrichterschaltung am Netzumrichter anliegende hohe Gleichspannung der Gleichspannungsquelle des elektrischen Versorgungsnetzes, insbesondere von typischerweise 1.5kV bzw. 3kV, ausgelegt werden. Im Gleichspannungsbetrieb der Traktionsumrichterschaltung, beispielsweise im motorischen Betrieb der Traktionsumrichterschaltung, wandelt der Netzumrichter dann die hohe Gleichspannung in eine Wechselspannung um, welche dann von der dritten Transformatorwicklung an die zweite Transformatorwicklung übertragen wird, so dass an der zweiten Transformatorwicklung durch geeignete Wahl des Übersetzungsverhältnisses zwischen der dritten Transformatorwicklung und der zweiten Transformatorwicklung eine sehr kleine Wechselspannung, insbesondere in der Grössenordnung von 500V, im Verhältnis zur hohen Gleichspannung anliegt. Der erste und zweite Teilumrichter sowie der Gleichspannungskreis des Antriebsumrichtersystems müssen somit bezüglich Ihrer Bauelemente und der diesbezüglichen Schaltungsverbindungen nur auf diese verhältnismässig kleine Spannung ausgelegt werden, so dass vorteilhaft ein sehr platzsparender und kompakter Aufbau eines jeden Antriebsumrichtersystems und damit der erfindungsgemässen Traktionsumrichterschaltung erreicht ist. Weiterhin kann dadurch, dass das Antriebsumrichtersystem nur auf eine kleine Spannung ausgelegt werden muss, erreicht werden, dass das Antriebsumrichtersystem und damit die erfindungsgemässe Traktionsumrichterschaltung selbst unkompliziert und kostengünstig zu realisieren und zu betreiben ist und sich durch eine geringe Störanfälligkeit und damit durch eine hohe Verfügbarkeit auszeichnet.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnung

Es zeigt:

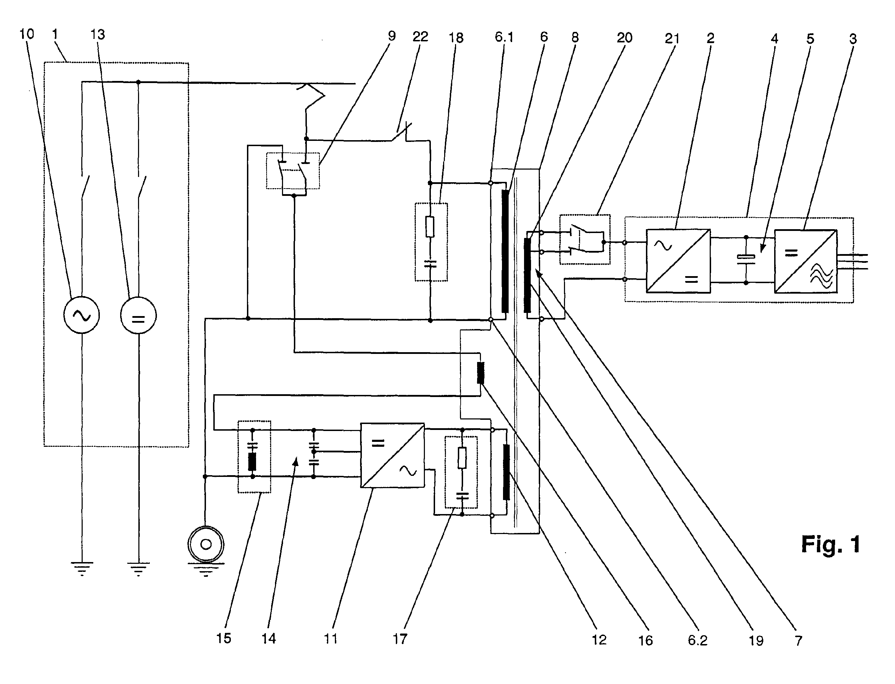

- Fig. 1: eine Ausführungsform einer erfindungsgemässen Traktionsumrichterschaltung zur Ankopplung an ein elektrisches Versorgungsnetz.

Die in der Zeichnung verwendeten Bezugszeichen und deren Bedeutung sind in der Bezugszeichenliste zusammengefasst aufgelistet. Grundsätzlich sind in der Figur gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

In Fig. 1 ist eine Ausführungsform einer erfindungsgemässen Traktionsumrichterschaltung zur Ankopplung an ein elektrisches Versorgungsnetz 1 gezeigt. Gängige elektrische Versorgungsnetze, insbesondere für Bahnnetze, mit einer Wechselspannungsquelle 10 nach Fig. 1 basieren auf einer Wechselspannung von 15kV mit einer Frequenz von 16 2/3Hz oder von 25kV und 50Hz. Gängige elektrische Versorgungsnetze, insbesondere für Bahnnetze, mit einer Gleichspannungsquelle 13 nach Fig. 1 basieren auf einer Gleichspannung von 1,5kV oder 3kV. Die Traktionsumrichterschaltung gemäss Fig. 1 weist allgemein mindestens ein aus einem ersten Teilumrichter 2 und aus einem zweiten Teilumrichter 3 gebildetes Antriebsumrichtersystem 4 auf, wobei bei jedem Antriebsumrichtersystem 4 der erste Teilumrichter 2 gleichspannungsseitig mit dem zweiten Teilumrichter 3 über einen Gleichspannungskreis 5 des Antriebsumrichtersystems 4 verbunden ist. Der Gleichspannungskreis 5 des Antriebsumrichtersystems 4 ist gemäss Fig. 1 durch einen Kondensator gebildet. Die erste und zweite Teilumrichter 2, 3 weist ferner jeweils eine Vielzahl an ansteuerbaren Leistungshalbleiterschaltern auf. Desweiteren ist gemäss Fig. 1 ein Transformator 8 vorgesehen, der eine erste Transformatorwicklung 6 und eine zweite Transformatorwicklung 7 aufweist. Der erste Teilumrichter 2 ist wechselspannungsseitig mit der zweiten Transformatorwicklung 7 verbunden. Gemäss Fig. 1 umfasst die erste Transformatorwicklung 6 einen ersten Anschluss 6.1 und einen zweiten Anschluss 6.2. Zudem ist die erste Transformatorwicklung 6 über einen Versorgungsnetzkonfigurationsschalter 9 beim Wechselspannungsbetrieb der Traktionsumrichterschaltung an die Wechselspannungsquelle 10 des elektrischen Versorgungsnetzes 1 schaltbar, d.h. die erste Transformatorwicklung 6 wird gemäss Fig. 1 mit der Wechselspannungsquelle 10 des elektrischen Versorgungsnetzes 1 im Falle des Wechselspannungsbetriebs der Traktionsumrichterschaltung verbunden beziehungsweise an die Wechselspannungsquelle 10 angekoppelt. In Fig. 1 ist der Versorgungsnetzkonfigurationsschalter 9 in der Stellung gezeigt, in der sich die Traktionsumrichterschaltung im Wechselspannungsbetrieb befindet. Der Versorgungsnetzkonfigurationsschalter 9 ist gemäss Fig. 1 zum einen mit dem elektrischen Versorgungsnetz 1, d.h. je nach Betriebsfall der Traktionsumrichterschaltung entweder mit der Wechselspannungsquelle 10 oder mit der Gleichspannungsquelle 13 verbunden, und zudem mit dem zweiten Anschluss 6.2 der ersten Transformatorwicklung 6 verbunden. Die Traktionsumrichterschaltung ist im Wechselspannungsbetrieb sowohl motorisch als auch generatorisch betreibbar. Im motorischen Wechselspannungsbetrieb wird elektrische Energie aus der Wechselspannungsquelle 10 über die erste Transformatorwicklung 6 an die zweite Transformatorwicklung 7 übertragen und von dort über das Antriebsumrichtersystem 4 einer elektrischen Last, welche typischerweise einen Antriebsmotor umfasst, zugeführt. Die angesprochene elektrische Last, welche in Fig. 1 der Übersichtlichkeit halber nicht dargestellt ist, ist üblicherweise mit der Wechselspannungsseite des zweiten Teilumrichters 3 verbunden. Im generatorischen Wechselspannungsbetrieb der Traktionsumrichterschaltung wird elektrische Energie von der elektrischen Last über das Antriebsumrichtersystem 4 der zweiten Transformatorwicklung 7 zugeführt und von dort an die erste Transformatorwicklung 6 übertragen und dann in das elektrische Versorgungsnetz 1 eingespeist.

Erfindungsgemäss ist bei der Traktionsumrichterschaltung nach Fig. 1 ein Netzumrichter 11 vorgesehen, welcher wechselspannungsseitig mit einer dritten Transformatorwicklung 12 des Transformators 8 verbunden ist, wobei der Netzumrichter 11 gleichspannungsseitig über den Versorgungsnetzkonfigurationsschalter 9 beim Gleichspannungsbetrieb der Traktionsumrichterschaltung an die Gleichspannungsquelle 13 des elektrischen Versorgungsnetzes 1 schaltbar ist, d.h. der Netzumrichter 11 wird gemäss Fig. 1 mit der Gleichspannungsquelle 13 des elektrischen Versorgungsnetzes 1 im Falle des Gleichspannungsbetriebs der Traktionsumrichterschaltung verbunden beziehungsweise an die Gleichspannungsquelle 13 angekoppelt. Die erste, zweite und dritte Transformatorwicklung 6, 7, 12 des Transformators 8 sind vorzugsweise auf einem Transformatorkern angeordnet, so dass zwischen den Transformatorwicklungen 6, 7, 12 eine magnetische Kopplung bei gleichzeitiger galvanischer Trennung vorhanden ist. Der Netzumrichter 11 ist aus einer Vielzahl von ansteuerbaren Leistungshalbleiterschaltern aufgebaut. Die Traktionsumrichterschaltung ist im Gleichspannungsbetrieb sowohl motorisch als auch generatorisch betreibbar. Im motorischen Gleichspannungsbetrieb wird elektrische Energie aus der Gleichspannungsquelle 13 in Form einer hohen Gleichspannung mittels des Netzumrichters 11 der dritten Transformatorwicklung 12 als Wechselspannung zugeführt und von dort an die zweite Transformatorwicklung 7 übertragen. Von der zweiten Transformatorwicklung 7 wird die elektrische Energie dann über das Antriebsumrichtersystem 4 der bereits vorstehend erwähnten elektrischen Last zugeführt. Im generatorischen Gleichspannungsbetrieb der Traktionsumrichterschaltung wird elektrische Energie von der elektrischen Last über das Antriebsumrichtersystem 4 der zweiten Transformatorwicklung 7 als Wechselspannung zugeführt und von dort an die dritte Transformatorwicklung 6 als Wechselspannung übertragen. Der Netzumrichter 11 erzeugt dann aus der in Form der Wechselspannung vorliegenden elektrischen Energie durch Gleichrichtung eine Gleichspannung, die dann in das elektrische Versorgungsnetz 1 eingespeist wird.

Durch den Einsatz des Netzumrichters 11 und der wechselspannungsseitig verbundenen dritten Transformatorwicklung 12 muss dieser lediglich auf die beim Gleichspannungsbetrieb der Traktionsumrichterschaltung am Netzumrichter 11 anliegende hohe Gleichspannung der Gleichspannungsquelle 13 des elektrischen Versorgungsnetzes 1, insbesondere von typischerweise 1.5kV bzw. 3kV, ausgelegt werden. Im Gleichspannungsbetrieb der Traktionsumrichterschaltung, beispielsweise im motorischen Betrieb der Traktionsumrichterschaltung, erzeugt der Netzumrichter 11 dann, wie bereits vorstehend erwähnt aus der hohen Gleichspannung eine Wechselspannung, welche dann von der dritten Transformatorwicklung 12 an die zweite Transformatorwicklung übertragen wird, so dass an der zweiten Transformatorwicklung 7 durch geeignete Wahl des Übersetzungsverhältnisses zwischen der dritten Transformatorwicklung 7 und der zweiten Transformatorwicklung 6 eine sehr kleine Wechselspannung, insbesondere in der Grössenordnung von 500V, im Verhältnis zur hohen Gleichspannung anliegt. Durch diese Massnahme müssen die ansteuerbaren Leistungshalbleiterschalter des ersten und zweite Teilumrichters 2, 3, der Kondensator des Gleichspannungskreises 5 des Antriebsumrichtersystems 4 sowie die Schaltungsverbindungen des ersten und zweiten Teilumrichters 2, 3 und des Gleichspannungskreises 5 des Antriebsumrichtersystems 4 lediglich auf die vorstehend bereits erwähnte kleine an der zweiten Transformatorwicklung 7 beziehungsweise an der Wechselspannungsseite des ersten Teilumrichters 2 anliegende Wechselspannung ausgelegt werden. Vorteilhaft können dadurch gegenüber aus dem Stand der Technik bekannten Antriebumrichtersystemen einfachere und vor allem kleinere ansteuerbare Leistungshalbleiterschalter des ersten und zweiten Teilumrichters 2, 3 sowie ein einfacherer und kleinerer Kondensator des Gleichspannungskreises 5 des Antriebsumrichtersystems 4 eingesetzt werden, so dass ein sehr platzsparender und kompakter Aufbau eines jeden Antriebsumrichtersystems 4 und damit der erfindungsgemässen Traktionsumrichterschaltung erreicht ist. Ein solcher kompakter und platzsparender Aufbau der erfindungsgemässen Traktionsumrichterschaltung ist vor allem in einem schienengebundenen Fahrzeug mit einem äusserst beschränktem Platzangebot für Traktionsumrichterschaltungen sehr erwünscht, vor allem dann, wenn mehrere Antriebsumrichtersysteme 4 in einer Traktionsumrichterschaltung vorgesehen sind. Darüber hinaus können auch die Schaltungsverbindungen des ersten und zweiten Teilumrichters 2, 3 und des Gleichspannungskreises 5 des Antriebsumrichtersystems 4 aufgrund der kleinen an der zweiten Transformatorwicklung 7 beziehungsweise an der Wechselspannungsseite des ersten Teilumrichters 2 anliegenden Wechselspannung gegenüber aus dem Stand der Technik bekannten Antriebumrichtersystemen einfacher und kleiner ausgeführt werden, so dass zusätzlich Platz beim Antriebsumrichtersystem 4 und damit bei der erfindungsgemässen Traktionsumrichterschaltung eingespart werden kann. Ferner sind die Sicherheitsanforderungen an die erfindungsgemässe Traktionsumrichterschaltung aufgrund der an der zweiten Transformatorwicklung 7 anliegenden sehr kleinen Wechselspannung, insbesondere in der Grössenordnung von 500V, mit Vorteil sehr gering. Zusätzlich lässt sich die erfindungsgemässe Traktionsumrichterschaltung durch die Verwendung der vorstehend genannten kleinen und einfachen Bauelemente des Antriebsumrichtersystems 4 kostengünstig realisieren und betreiben und weist dadurch insgesamt eine geringe Störanfälligkeit und damit durch eine hohe Verfügbarkeit auf. Weiterhin kann der erste Teilumrichter 2 und der zweite Teilumrichter 3 aufgrund der an der zweiten Transformatorwicklung 7 anliegenden sehr kleinen Wechselspannung, insbesondere in der Grössenordnung von 500V, mit einer hohen Schaltfrequenz der jeweiligen ansteuerbaren Leistungshalbleiterschalter betrieben werden, so dass sowohl vom ersten Teilumrichter 2 als auch vom zweiten Teilumrichter 3 vorteilhaft nur geringe Oberschwingungen bezüglich Strom und Spannung generiert werden.

Wie bereits erwähnt, ist in Fig. 1 die Stellung des Versorgungsnetzkonfigurationsschalters 9 gezeigt, in der sich die Traktionsumrichterschaltung im Wechselspannungsbetrieb befindet, d.h. in dieser Stellung des Versorgungsnetzkonfigurationsschalters 9 und damit im Wechselspannungsbetrieb der Traktionsumrichterschaltung ist der Netzumrichter 11 nicht mit dem elektrischen Versorgungsnetz 1 verbunden und hat somit keine Funktion zum Betrieb der Traktionsumrichterschaltung. Im Gleichspannungsbetrieb hingegen ist der Netzumrichter 11, wie bereits vorstehend detailliert erläutert, gleichspannungsseitig über den Versorgungsnetzkonfigurationsschalter 9 beim Gleichspannungsbetrieb der Traktionsumrichterschaltung mit Gleichspannungsquelle 13 des elektrischen Versorgungsnetzes 1 verbunden, d.h. die erste Transformatorwicklung 6 ist im Gleichspannungsbetrieb der Traktionsumrichterschaltung nicht mit dem elektrischen Versorgungsnetz 1 verbunden und hat somit keine Funktion zum Betrieb der Traktionsumrichterschaltung.

Mittels eines Transformatortrennschalters 22, welcher gemäss Fig. 1 zum einen mit dem elektrischen Versorgungsnetz 1, d.h. je nach Betriebsfall der Traktionsumrichterschaltung entweder mit der Wechselspannungsquelle 10 oder mit der Gleichspannungsquelle 13 verbunden ist, und zudem mit dem ersten Anschluss 6.1 der ersten Transformatorwicklung 6 verbunden ist, ist der Transformator 8 im Fall des Gleichspannungsbetriebs der Traktionsumrichterschaltung vom elektrischen Versorgungsnetz 1 abtrennbar, d.h. der Transformatortrennschalter 22 ist dann geöffnet. Vorteilhaft wird der Transformator 8 durch diese Abtrennung im Fall des Gleichspannungsbetriebs der Traktionsumrichterschaltung vor Einkopplungen beispielsweise von Oberschwingungen aus dem elektrischen Versorgungsnetz 1 vor Beschädigungen oder gar Zerstörung geschützt. In Fig. 1 ist der Transformatortrennschalter 22 in der Stellung gezeigt, in der sich die Traktionsumrichterschaltung im Wechselspannungsbetrieb befindet, d.h. der Transformatortrennschalter 22 ist geschlossen und die erste Transformatorwicklung 6 ist dann an die Wechselspannungsquelle 10 des elektrischen Versorgungsnetzes 1 schaltbar.

Gemäss Fig. 1 ist zur Speicherung elektrischer Energie im Gleichspannungsbetrieb der Traktionsumrichterschaltung zwischen dem Versorgungsnetzkonfigurationsschalter 9 und der Gleichspannungsseite des Netzumrichters 11 vorteilhaft ein Gleichspannungskreis 14 mit einer parallel vorgeschalteten Eingangsfilterschaltung 15 eingeschaltet. Vorzugsweise ist der Netzumrichter 11 zur Schaltung von drei Gleichspannungsniveaus ausgebildet, wobei der mit dem Netzumrichter 11 verbundene Gleichspannungskreis 14 durch zwei in Serie geschaltete Kondensatoren gebildet ist. Vorteilhaft wird durch einen derart ausgeführten Netzumrichter 11 und dem damit verbundenen Gleichspannungskreis 14 erreicht, dass grosse Leistungen übertragen werden können, wobei die ansteuerbaren Leistungshalbleiterschalter des Netzumrichters 11 beim Gleichspannungsbetrieb der Traktionsumrichterschaltung maximal nur den halben Spannungswert der Gleichspannungsquelle 13 schalten müssen und somit vorteilhaft nur auf eine Spannungsfestigkeit entsprechend des halben Spannungswertes der Gleichspannungsquelle 13 ausgelegt sein müssen. Dadurch kann aber weiterer Platz bei der erfindungsgemässen Traktionsumrichterschaltung eingespart werden, da einfachere, kostengünstigere und vor allem kleinere ansteuerbare Leistungshalbleiterschalter des Netzumrichters 11 verwendet werden können. Zudem wird eine vorteilhafte Reduktion der Oberschwingungen erzielt, da drei Gleichspannungsniveaus geschaltet werden können und somit ein exakterer sinusförmiger Verlauf der zu erzeugenden und an der dritten Transformatorwicklung 12 anliegenden Wechselspannung generiert werden kann.

Alternativ zur vorstehend beschriebenen und in Fig. 1 dargestellten Ausführungsform des Netzumrichters 11 zur Schaltung von drei Gleichspannungsniveaus und dem mit dem Netzumrichter 11 verbundenen Gleichspannungskreis 14 mit zwei in Serie geschaltete Kondensatoren ist es auch denkbar, dass der Netzumrichter 11 zur Schaltung von zwei Gleichspannungsniveaus ausgebildet ist, wobei dann der mit dem Netzumrichter 11 verbundene Gleichspannungskreis 14 durch nur einen Kondensator gebildet ist. Die ansteuerbaren Leistungshalbleiterschalter eines derart ausgeführten Netzumrichters 11 müssen zwar auf die beim Gleichspannungsbetrieb der Traktionsumrichterschaltung an der Gleichspannungsseite des Netzumrichters 11 anliegenden hohen Gleichspannung der Gleichspannungsquelle 13 und damit auf eine Spannungsfestigkeit entsprechend des Spannungswertes der Gleichspannungsquelle 13 ausgelegt werden, jedoch werden beim vorstehend erwähnten Netzumrichter 11 zur Schaltung von zwei Gleichspannungsniveaus gegenüber der Ausführungsform des Netzumrichters 11 zur Schaltung von drei Gleichspannungsniveaus vorteilhaft sehr viel weniger ansteuerbare Leistungshalbleiterschalter und andere elektronische Bauelemente benötigt. Weiterhin wird beim vorstehend erwähnten Gleichspannungskreis 14 des Netzumrichters 11 zur Schaltung von zwei Gleichspannungsniveaus gegenüber dem in Fig. 1 dargestellten Gleichspannungskreis 14 des Netzumrichters 11 zur Schaltung von drei Gleichspannungsniveaus nur ein einziger Kondensator benötigt, so dass insgesamt bei der Ausführungsform des Netzumrichters 11 zur Schaltung von zwei Gleichspannungsniveaus und beim zu gehörigen Gleichspannungskreis 14 Bauelemente und damit bei der erfindungsgemässen Traktionsumrichterschaltung weiter Platz eingespart werden kann, wobei sich die Traktionsumrichterschaltung zudem weiter vereinfacht. Es versteht sich, dass auch beim Gleichspannungskreis 14 des Netzumrichters 11 zu Schaltung von zwei Spannungsniveaus eine parallel zum Gleichspannungskreis 14 vorgeschaltete Eingangsfilterschaltung 15 vorgesehen ist.

Die Grundfrequenz der an der Wechselspannungsseite des Netzumrichters 11 anliegenden Wechselspannung beträgt vorzugsweise 100Hz, so dass im wesentlichen nur durch den Netzstromrichter 11 erzeugte harmonische Oberschwingungen bezüglich dieser Grundfrequenz auf der Seite des elektrischen Versorgungsnetzes 1 auftreten. Zur Ausfilterung einer dieser Oberschwingungen auf der Seite des elektrischen Versorgungsnetzes 1, insbesondere der ersten harmonischen Oberschwingung bezüglich der an der Wechselspannungsseite des Netzumrichters 11 anliegenden Wechselspannung, d.h. bei einer Grundfrequenz von 100Hz die Oberschwingung mit einer Frequenz von 200Hz, ist die bereits erwähnte Eingangsfilterschaltung 15 vorgesehen. Diese Eingangsfilterschaltung 15 weist allgemein einen auf eine Oberschwingungsfrequenz bezüglich der an der Wechselspannungsseite des Netzumrichters 11 anliegenden Wechselspannung abgestimmten Serienschwingkreis auf. Für die erwähnte Grundfrequenz von 100Hz weist der Serienschwingkreis zur Ausfilterung der ersten harmonischen Oberschwingung somit vorteilhaft eine Resonanzfrequenz von 200 Hz auf. Es versteht sich, dass allgemein auch eine an der Wechselspannungsseite des Netzumrichters 11 anliegenden Wechselspannung mit einer kleinere oder grössere Grundfrequenz als 100Hz vorliegen kann und sich die erste harmonische Oberschwingung dann dementsprechend ergibt.

Gemäss Fig. 1 ist bei der erfindungsgemässen Traktionsumrichterschaltung zwischen dem Versorgungsnetzkonfigurationsschalter 9 und der Eingangsfilterschaltung 15 eine Netzfilterfilterinduktivität 16 eingeschaltet, welche vorteilhaft der Begrenzung von eventuell auftretenden Störströmen dient. Solche Störströme treten üblicherweise im Betrieb der Traktionsumrichterschaltung auf und sind abhängig von der Leistung, welche von der Traktionsumrichterschaltung übertragen wird. Vorzugsweise ist die Netzfilterfilterinduktivität 16 im Gehäuse des Transformators 8 angeordnet. Durch diese Integration der Netzfilterfilterinduktivität 16 im Gehäuse des Transformators 8 ist ein besonders kompakter und somit platzsparender Aufbau des Transformators 8 zusammen mit der Netzfilterfilterinduktivität 16 erreicht, wobei die Netzfilterfilterinduktivität 16 durch die Integration im Gehäuse des Transformators 8 vorteilhaft zusätzlich durch das im Gehäuse des Transformators 8 befindliche Transformatoröl gekühlt werden kann. Eine separate Kühlung der Netzfilterfilterinduktivität 16 mit einem grossen Platzbedarf entfällt somit.

Ferner ist bei der erfindungsgemässen Traktionsumrichterschaltung gemäss Fig. 1 eine erste Dämpfungsschaltung 17 parallel zur dritten Transformatorwicklung 12 geschaltet. Desweiteren ist eine zweite Dämpfungsschaltung 18 parallel zur ersten Transformatorwicklung 6 geschaltet. Gemäss Fig. 1 ist die erste Dämpfungsschaltung 17 und die zweite Dämpfungsschaltung 18 jeweils aus einer Serienschaltung eines Kondensators und eines Widerstands gebildet. Die erste Dämpfungsschaltung 17 dient vorteilhaft der Dämpfung von Spannungsoberschwingungen an der dritten Transformatorwicklung 12, welche durch die magnetische Kopplung der ersten, zweiten und dritten Transformatorwicklung 6, 7, 12 beim Wechselspannungsbetrieb der Traktionsumrichterschaltung durch den ersten und zweiten Teilumrichter 2, 3 des Antriebsumrichtersystems 4 erzeugt werden können. Durch die vorstehend erwähnten Dämpfung der Spannungsoberschwingungen mit Hilfe der ersten Dämpfungsschaltung 17 kann die dritte Transformatorwicklung 12 vorteilhaft vor Beschädigung oder Zerstörung geschützt werden. Darüber hinaus dient die zweite Dämpfungsschaltung 18 vorteilhaft der Dämpfung von Spannungsoberschwingungen an der ersten Transformatorwicklung 6, welche durch die magnetische Kopplung der ersten, zweiten und dritten Transformatorwicklung 6, 7, 12 beim Gleichspannungsbetrieb der Traktionsumrichterschaltung durch den Netzumrichter 11 und durch den ersten und zweiten Teilumrichter 2, 3 des Antriebsumrichtersystems 4 erzeugt werden können. Durch die vorstehend erwähnten Dämpfung der Spannungsoberschwingungen mit Hilfe der zweiten Dämpfungsschaltung 18 kann die erste Transformatorwicklung 6 vorteilhaft vor Beschädigung oder Zerstörung geschützt werden.

Gemäss Fig. 1 ist bei der erfindungsgemässen Traktionsumrichterschaltung die zweite Transformatorwicklung 7 durch eine erste Teilwicklung 19 und eine in Serie zur ersten Teilwicklung 19 geschaltete zweite Teilwicklung 20 gebildet. Weiterhin ist der erste Teilumrichter 2 wechselspannungsseitig durch einen Transformatorwicklungsschalter 21 mit der ersten Teilwicklung 19 der zweiten Transformatorwicklung 7 oder mit der gesamten zweiten Transformatorwicklung 7 verbindbar. In Fig. 1 ist die Stellung des Transformatorwicklungsschalter 21 gezeigt, bei der die erste Teilwicklung 19 mit dem ersten Teilumrichter 2 verbunden ist. Der Transformatorwicklungsschalter 21 weist diese in Fig. 1 gezeigte Stellung vorzugsweise dann auf, wenn sich die Traktionsumrichterschaltung im Gleichspannungsbetrieb mit einer Gleichspannungsquelle 10 basierend auf einer Gleichspannung von 3kV oder wenn sich die Traktionsumrichterschaltung im Wechselspannungsbetrieb mit einer Wechselspannungsquelle 10 basierend auf einer Wechselspannung von 15kV und 16 2/3Hz befindet. Vorteilhaft kann das Übersetzungsverhältnis zwischen der dritten Transformatorwicklung 12 und der zweiten Transformatorwicklung 7 im vorstehend genannten Gleichspannungsbetrieb der Traktionsumrichterschaltung und das Übersetzungsverhältnis zwischen der ersten Transformatorwicklung 6 und der zweiten Transformatorwicklung 7 im vorstehend genannten Wechselspannungsbetrieb der Traktionsumrichterschaltung auf einfache Weise gewählt werden. Falls sich die Traktionsumrichterschaltung im Gleichspannungsbetrieb mit einer Gleichspannungsquelle 10 basierend auf einer Gleichspannung von 1.5kV oder falls sich die Traktionsumrichterschaltung im Wechselspannungsbetrieb mit einer Wechselspannungsquelle 10 basierend auf einer Wechselspannung von 25kV und 50Hz befindet, ist die gesamte zweite Transformatorwicklung 7 durch die entsprechende Stellung des Transformatorwicklungsschalter 21 mit dem ersten Teilumrichter 2 verbunden. Vorteilhaft kann auch hier das Übersetzungsverhältnis zwischen der dritten Transformatorwicklung 12 und der zweiten Transformatorwicklung 7 im vorstehend genannten Gleichspannungsbetrieb der Traktionsumrichterschaltung und das Übersetzungsverhältnis zwischen der ersten Transformatorwicklung 6 und der zweiten Transformatorwicklung 7 im vorstehend genannten Wechselspannungsbetrieb der Traktionsumrichterschaltung auf einfache Weise gewählt werden.

Insgesamt stellt die erfindungsgemässe Traktionsumrichterschaltung damit eine unkomplizierte, robuste und wenig störungsanfällige Lösung dar, die zusätzlich mit einem Minimum an Platz auskommt.

### Bezugszeichenliste

- 1: elektrisches Versorgungsnetz
- 2: erster Teilumrichter
- 3: zweiter Teilumrichter
- 4: Antriebsumrichtersystem
- 5: Gleichspannungskreis des Antriebsumrichtersystems
- 6: erste Transformatorwicklung
- 6.1: erster Anschluss der ersten Transformatorwicklung
- 6.2: zweiter Anschluss der ersten Transformatorwicklung
- 7: zweite Transformatorwicklung
- 8: Transformator
- 9: Versorgungsnetzkonfigurationsschalter
- 10: Wechselspannungsquelle
- 11: Netzumrichter
- 12: dritte Transformatorwicklung
- 13: Gleichspannungsquelle
- 14: Gleichspannungskreis des Netzumrichters
- 15: Eingangsfilterschaltung
- 16: Netzfilterfilterinduktivität
- 17: erste Dämpfungsschaltung
- 18: zweite Dämpfungsschaltung
- 19: erste Teilwicklung der zweiten Transformatorwicklung
- 20: zweite Teilwicklung der zweiten Transformatorwicklung
- 21: Transformatorwicklungsschalter
- 22: Transformatortrennschalter

## Patentansprüche

1. Traktionsumrichterschaltung zur Ankopplung an ein elektrisches Versorgungsnetz (1) mit mindestens einem aus einem ersten Teilumrichter (2) und einem zweiten Teilumrichter (3) gebildeten Antriebsumrichtersystem (4), wobei bei jedem Antriebsumrichtersystem (4) der erste Teilumrichter (2) gleichspannungsseitig mit dem zweiten Teilumrichter (3) über einen Gleichspannungskreis (5) verbunden ist, und mit einem eine erste Transformatorwicklung (6) und eine zweite Transformatorwicklung (7) aufweisenden Transformator (8), wobei der erste Teilumrichter (2) wechselspannungsseitig mit der zweiten Transformatorwicklung (7) verbunden ist und die erste Transformatorwicklung (6) über einen Versorgungsnetzkonfigurationsschalter (9) beim Wechselspannungsbetrieb der Traktionsumrichterschaltung an eine Wechselspannungsquelle (10) des elektrischen Versorgungsnetzes (1) schaltbar ist, **dadurch gekennzeichnet,**
**dass** ein Netzumrichter (11) vorgesehen ist, welcher wechselspannungsseitig mit einer dritten Transformatorwicklung (12) des Transformators (8) verbunden ist, und dass der Netzumrichter (11) gleichspannungsseitig über den Versorgungsnetzkonfigurationsschalter (9) beim Gleichspannungsbetrieb der Traktionsumrichterschaltung an eine Gleichspannungsquelle (13) des elektrischen Versorgungsnetzes (1) schaltbar ist.

2. Traktionsumrichterschaltung nach Anspruch 1, **dadurch gekennzeichnet, dass** ein Transformatortrennschalter (22) mit der ersten Transformatorwicklung (6) verbunden ist, wobei die erste Transformatorwicklung (6) durch den Transformatortrennschalter (22) an die Wechselspannungsquelle (10) des elektrischen Versorgungsnetzes (1) schaltbar ist.

3. Traktionsumrichterschaltung nach Anspruch 1 oder 2, **dadurch gekennzeichnet, dass** zwischen dem Versorgungsnetzkonfigurationsschalter (9) und der Gleichspannungsseite des Netzumrichters (11) ein Gleichspannungskreis (14) mit einer parallel vorgeschalteten Eingangsfilterschaltung (15) eingeschaltet ist.

4. Traktionsumrichterschaltung nach Anspruch 3, **dadurch gekennzeichnet, dass** der Netzumrichter (11) zur Schaltung von drei Gleichspannungsniveaus ausgebildet ist, und dass der mit dem Netzumrichter (11) verbundene Gleichspannungskreis (14) durch zwei in Serie geschaltete Kondensatoren gebildet ist.

5. Traktionsumrichterschaltung nach Anspruch 3, **dadurch gekennzeichnet, dass** der Netzumrichter (11) zur Schaltung von zwei Gleichspannungsniveaus ausgebildet ist, und dass der mit dem Netzumrichter (11) verbundene Gleichspannungskreis (14) durch einen Kondensator gebildet ist.

6. Traktionsumrichterschaltung nach einem der Ansprüche 3 bis 5, **dadurch gekennzeichnet, dass** die Eingangsfilterschaltung (15) einen auf eine Oberschwingungsfrequenz bezüglich einer an der Wechselspannungsseite des Netzumrichters (11) anliegenden Wechselspannung abgestimmten Serienschwingkreis aufweist.

7. Traktionsumrichterschaltung nach einem der Ansprüche 3 bis 6, **dadurch gekennzeichnet, dass** zwischen dem Versorgungsnetzkonfigurationsschalter (9) und der Eingangsfilterschaltung (15) eine Netzfilterfilterinduktivität (16) eingeschaltet ist, wobei die Netzfilterfilterinduktivität (16) im Gehäuse des Transformators (8) angeordnet ist.

8. Traktionsumrichterschaltung nach einem der vorhergehenden Ansprüche, **dadurch gekennzeichnet, dass** eine erste Dämpfungsschaltung (17) parallel zur dritten Transformatorwicklung (12) geschaltet ist.

9. Traktionsumrichterschaltung nach einem der vorhergehenden Ansprüche, **dadurch gekennzeichnet, dass** eine zweite Dämpfungsschaltung (18) parallel zur ersten Transformatorwicklung (6) geschaltet ist.

10. Traktionsumrichterschaltung nach Anspruch 8 oder 9, **dadurch gekennzeichnet, dass** die erste Dämpfungsschaltung (17) und die zweite Dämpfungsschaltung (18) jeweils aus einer Serienschaltung eines Kondensators und eines Widerstands gebildet ist.

11. Traktionsumrichterschaltung nach einem der vorhergehenden Ansprüche, **dadurch gekennzeichnet, dass** die zweite Transformatorwicklung (7) durch eine erste Teilwicklung (19) und eine in Serie zur ersten Teilwicklung (19) geschaltete zweite Teilwicklung (20) gebildet ist, und dass der erste Teilumrichter (2) wechselspannungsseitig durch einen Transformatorwicklungsschalter (21) mit der ersten Teilwicklung (19) der zweiten Transformatorwicklung (7) oder mit der gesamten zweiten Transformatorwicklung (7) verbindbar ist.
